# FASCICULE DE BREVET EUROPEEN

(11) **EP 3 242 812 B1**
(45) Date de publication et mention de la délivrance du brevet: **09.02.2022**
(21) Numéro de dépôt: 15823724.8
(22) Date de dépôt: 30.12.2015
(51) Int. Cl.: B60Q 1/068, B60Q 1/076, F16B 41/00

(54) **CORRECTEUR D'ÉCLAIRAGE DE PROJECTEUR AUTOMOBILE À BUTÉE AMÉLIORÉE**
BELEUCHTUNGSKORREKTOR FÜR EINEN KRAFTFAHRZEUGSCHEINWERFER MIT VERBESSERTEM STÜTZTEIL
LIGHTING CORRECTOR FOR A MOTOR-VEHICLE HEADLAMP WITH IMPROVED ABUTMENT

(30) Priorité: 06.01.2015 FR 1550077
(43) Date de publication de la demande: 15.11.2017
(73) Titulaire: AML Systems, 75008 Paris (FR)
(72) Inventeur: TOULISSE, Ludovic, 93700 Drancy (FR); KOULOUH, Hassan, 93310 Le Pre Saint Gervais (FR)
(74) Mandataire: Gevers & Orès
(86) Numéro de dépôt international: PCT/FR2015/053770
(87) Numéro de publication internationale: WO 2016/110630

(56) Documents cités:
- EP-A1- 0 705 729
- EP-A1- 0 985 577
- EP-A1- 2 112 021
- EP-A1- 2 918 447
- CN-U- 202 813 229
- FR-A1- 2 786 143

## Description

Le domaine de la présente invention est celui des projecteurs de lumière pour véhicules automobiles et, plus particulièrement, celui des correcteurs d'assiette pour ces projecteurs.

Il est en effet nécessaire de régler la hauteur du faisceau émis par le projecteur pour, qu'en position des feux de route, il éclaire parfaitement la route qu'emprunte le véhicule et, qu'en feux de croisement, il n'éblouisse pas les conducteurs de véhicules venant en sens inverse. Pour cela il est important de pourvoir adapter l'angle de site des projecteurs du véhicule en fonction de l'assiette du véhicule.

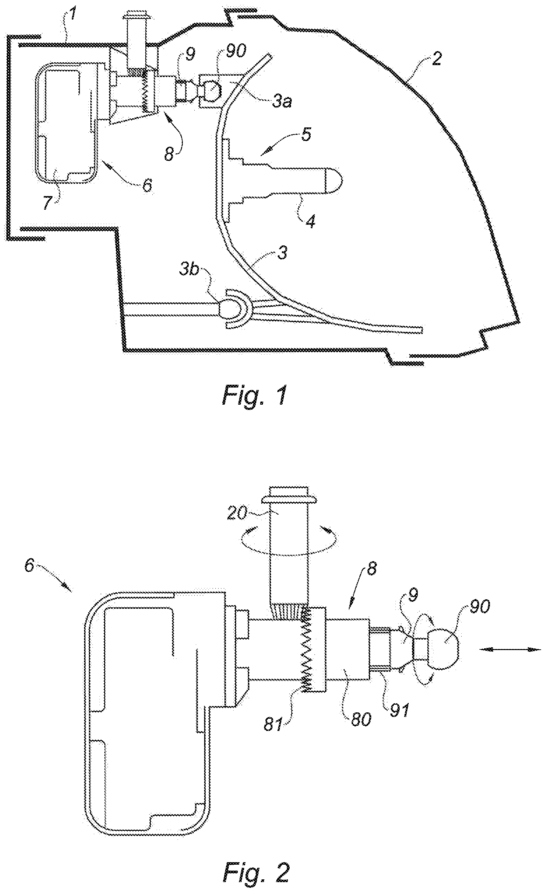

Un exemple de projecteur d'éclairage selon l'art antérieur est représenté sur la figure 1. D'une façon générale, un projecteur de véhicule automobile, comporte un boîtier 1 fermé par une glace de protection 2. Une unité d'éclairage 5 est montée à l'intérieur du boîtier 1, face à la glace de protection 2, pour émettre un faisceau lumineux dirigé vers la scène de route située à l'avant du véhicule. Cette unité d'éclairage comporte une source lumineuse 4 installée devant un réflecteur 3. Le réflecteur 3 a pour rôle de diriger le faisceau émis par la source lumineuse 4.

Aussi, pour orienter le faisceau lumineux et ainsi régler la hauteur dudit faisceau, il est connu de modifier la position du réflecteur 3 à l'intérieur de l'unité d'éclairage 5. La position du réflecteur 3 est modifiée généralement au moyen d'un correcteur d'éclairage 6. Le correcteur d'éclairage 6 est un dispositif électromécanique apte à entraîner le pivotement du réflecteur 3. Pour cela le correcteur d'éclairage 6 comporte un module électrique. Ce module électrique est généralement équipé d'un moteur 7 et d'une carte électronique. La carte électronique est apte à recevoir des données relatives à l'assiette du véhicule et à commander le fonctionnement du moteur.

En utilisation normale, la rotation du moteur entraîne la translation d'une tige filetée sur laquelle est monté un fourreau longitudinal 9 dont l'extrémité a la forme d'une sphère 90. Le déplacement du fourreau 9 entraîne le déplacement de la sphère 90 dans une capsule 3a fixée sur le réflecteur 3, par exemple dans la partie supérieure du réflecteur. Ce déplacement de la sphère 90 entraîne le pivotement du réflecteur 3 autour d'un pivot 3b qui est situé, par exemple, en partie basse de ce réflecteur.

Les documents EP 0 705 729, EP 2 786 143 et CN 202 813 229 décrivent des exemples de correcteurs d'éclairage.

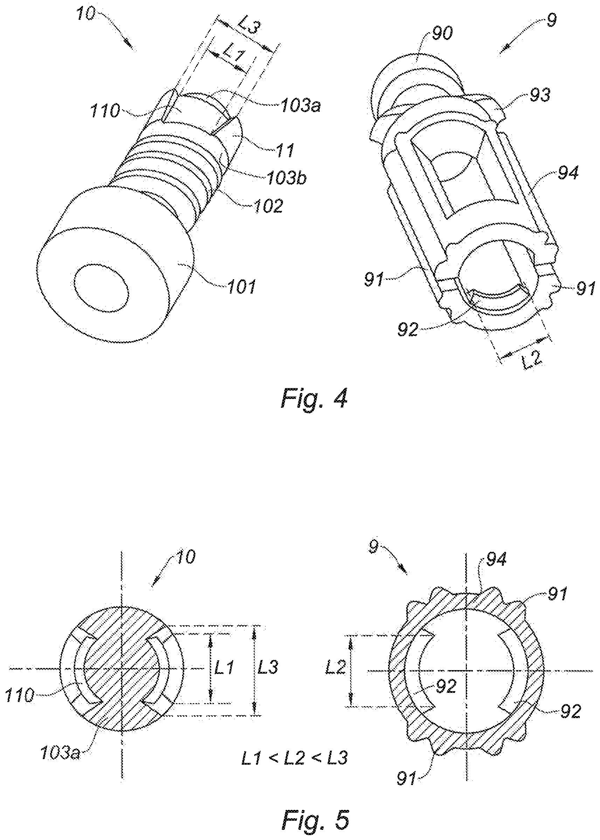

Outre le dispositif de correction de la hauteur du faisceau, décrit ci-dessus, qui est actionné, en utilisation normale, par l'utilisateur ou par un système automatique de correction d'assiette du projecteur, il est nécessaire de prévoir un dispositif de réglage manuel 8, qui soit accessible seulement par un opérateur de montage ou par un garagiste et qui a pour but de définir un réglage de hauteur de référence, à partir duquel le dispositif de correction de hauteur pourra agir sous la seule action du moteur électrique. A cette fin, qui répond à une obligation réglementaire dans la plupart des pays, le fourreau longitudinal 9 est monté libre en rotation sur la tige filetée, à la manière d'une liaison visécrou, de façon à pouvoir modifier sa position longitudinale sur cette tige. Le fourreau 9 comporte pour cela, à son extrémité opposée à la sphère 90, des filets 92 (visibles sur la figure 4) qui s'insèrent dans le filetage de la tige filetée 10.

Le dispositif de réglage manuel comprend, tel que cela apparaît sur la figure 2, une roue dentée 81 qui est portée par un manchon de guidage 80 et une clé de réglage 20. Le fourreau 9 est positionné dans le manchon de guidage 80 et comporte des nervures de guidage 91 qui sont alignées selon sa direction d'actionnement. Ces nervures coulissent dans des rainures qui sont pratiquées sur la face interne du manchon de guidage 80.

L'opérateur, en agissant sur la clé 20 dont l'extrémité comporte des dents qui engrènent sur la roue dentée 81, peut faire tourner le manchon de guidage 80 dans un sens ou dans l'autre. Ce faisant, il génère une rotation du fourreau 9 qui se déplace sur la tige filetée 10, en tournant avec ledit manchon et en glissant sur les rainures internes de celui-ci. La tige filetée 10 étant, cette fois, fixe en absence d'actionnement par le moteur électrique 7, la rotation du fourreau 9 provoque son déplacement longitudinal par vissage ou dévissage sur le filetage de la tige 10 et entraîne, corrélativement, le déplacement de la sphère 90. Une fois que le réglage de référence est obtenu, l'opérateur retire la clé 20 et le correcteur d'éclairage 6 peut alors fonctionner, sous l'action du moteur électrique 7, autour de cette position de référence qui a été donnée au fourreau 9.

Un des inconvénients rencontrés sur les dispositifs existants est qu'ils ont une course mécanique prédéfinie et qu'un dépassement de cette course, du fait par exemple d'une erreur de montage ou d'une inattention de l'opérateur, peut aboutir à une désolidarisation du fourreau 9 d'avec le mécanisme 8, et en particulier d'avec la tige filetée 10. Or il importe que le dispositif de réglage manuel reste opérationnel, même en cas d'atteinte de la fin de sa course, ceci afin d'éviter un démontage pour remise en état ou, pire, une mise au rebut du correcteur.

La présente invention a pour but de remédier à ces inconvénients en proposant un correcteur d'éclairage dont le mécanisme reste opérationnel lors de l'atteinte de la fin de course par le fourreau d'actionnement du réflecteur, avec notamment une possibilité de retour après l'atteinte de cette position extrême.

A cet effet, l'invention a pour objet un correcteur de hauteur d'éclairage pour un projecteur automobile à réflecteur comprenant les caractéristiques de la revendication 1.

La butée placée en fin de filetage permet d'empêcher l'élément de réglage de se désolidariser de la tige filetée et donc d'avoir à démonter le correcteur dans le cas d'un couple trop important appliqué en éloignement à cet élément de réglage.

Dans un mode particulier de réalisation, le correcteur comporte en outre un manchon de réglage manuel entourant l'élément de réglage, ledit élément de réglage comportant au moins une nervure conformée pour l'immobiliser en rotation par rapport au manchon par coopération avec des moyens de guidage en translation portés par ledit manchon.

Selon l'invention, la tige filetée a sensiblement la forme d'une barre cylindrique, dans laquelle est formé ledit filetage, qui se prolonge par un butoir sensiblement cylindrique dont le diamètre est supérieur à celui du fond dudit filetage, ledit butoir formant ladite butée pour l'extrémité distale dudit filetage. Ce butoir assure le maintien de l'élément de réglage dans le filetage grâce au fait que son diamètre reste toujours supérieur à celui du fond du filetage.

Selon l'invention, ladite butée est formée par une première face plane faisant un angle avec un plan axial correspondant de la tige filetée à son extrémité distale, de façon à former un coin femelle rentrant. Cette forme en coin femelle forme un toit pour l'extrémité du filet circulant dans le filetage et l'empêche de lui passer par-dessus. Plus particulièrement ladite première face fait un angle compris entre 5 et 30° avec le plan axial de la tige filetée.

Avantageusement, le butoir comporte au moins une entaille s'étendant circulairement, sur le secteur angulaire de laquelle le diamètre du butoir est réduit par rapport au diamètre du butoir hors entaille. Cette entaille a pour objet de faciliter l'entrée d'un filet dans le filetage de la tige.

Plus avantageusement, l'entaille est limitée latéralement par deux faces planes alignées avec une inclinaison par rapport à un plan axial de sorte que l'ouverture angulaire en partie basse du butoir est plus faible que celle en partie haute. Cette configuration améliore encore l'entrée d'un filet dans le filetage de la tige.

Selon l'invention, l'élément de réglage a la forme d'un cylindre creux dont la partie proximale porte au moins un secteur d'hélice formant ledit filet. Le fait que l'élément de réglage ne puisse comporter qu'un secteur d'hélice facilite son entrée dans un filetage par déformation dudit filet.

Selon l'invention, ledit filet s'étend à partir de l'intérieur du cylindre et comporte à au moins une de ses extrémités une seconde face plane faisant un angle avec un plan axial correspondant du cylindre de façon à former un coin mâle saillant. Plus avantageusement ladite seconde face fait un angle compris entre 5 et 30° avec le plan axial du cylindre.

Avantageusement, ledit filet comporte un coin mâle saillant à chacune de ses extrémités.

De façon préférentielle, l'ouverture angulaire L2 du filet est comprise entre l'ouverture angulaire L1 en partie basse du butoir et l'ouverture angulaire L3 en partie haute dudit butoir.

Dans un mode particulier de réalisation, ladite tige filetée comprend, à son extrémité proximale, au moins une seconde butée limitant la translation de l'élément de réglage en rapprochement par rapport audit correcteur.

Avantageusement, le filetage de la tige filetée se termine contre une troisième face plane faisant un angle avec un plan axial correspondant de la tige filetée de façon à former un coin femelle rentrant Plus avantageusement, ladite troisième face fait un angle compris entre 5 et 30° avec le plan axial de la tige filetée.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés. Sur ces dessins :
- la figure 1, déjà décrite, est une vue schématique, en coupe, d'un projecteur d'automobile équipé d'un correcteur d'éclairage ;
- la figure 2, déjà décrite également, est une vue de détail, de face, du correcteur d'éclairage du projecteur de la figure 1 ;
- la figure 3 est une vue en perspective, depuis l'avant, d'une tige filetée et d'un fourreau de réglage d'un correcteur d'éclairage selon un mode de réalisation de l'invention ;
- la figure 4 est une vue en perspective, depuis l'arrière, de la tige filetée et du fourreau de réglage de la figure 3, et
- la figure 5 est une vue en coupe de la tige filetée et du fourreau de réglage de la figure 3,
- la figure 6 est une vue en coupe axiale du fourreau de la figure 3,
- la figure 7 est une vue en coupe radiale du fourreau de la figure 6,
- la figure 8 est une vue de face de la tige filetée de la figure 3, et
- la figure 9 est une vue en coupe de la tige filetée de la figure 8, selon deux plans radiaux distincts.

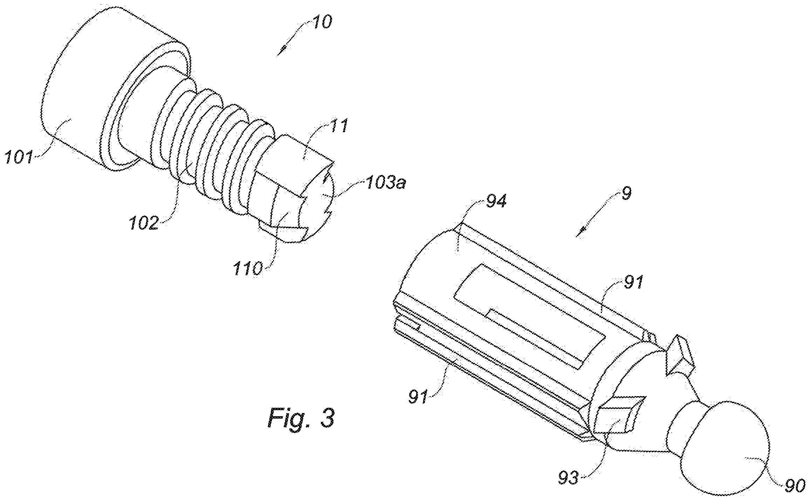

En se référant aux figures 3 et 4, on voit d'une part la tige filetée 10 et le fourreau de réglage 9 d'un correcteur d'éclairage 6 selon l'invention. La tige filetée comporte un socle 101, sensiblement cylindrique, duquel s'étend une barre cylindrique filetée 102 qui se termine par un dispositif butoir 11 dont le but est de former une butée pour le fourreau 9 lorsque celui-ci arrive en fin de sa course de réglage, vers l'extérieur. Le butoir 11 a, pour cela, une forme essentiellement cylindrique qui s'inscrit dans le diamètre extérieur de la barre 102. Il présente une première face radiale 103a à son extrémité qui est située du côté où se trouve le fourreau de réglage.

Il présente également une seconde face sensiblement radiale 103b à son autre extrémité, qui fait face au filetage de la barre 102, contre laquelle viennent se positionner les filets 92 du fourreau 9 lors d'une phase d'extension du mécanisme 8. Les filets 92 du fourreau 9 qui circulent dans le filetage de la barre 102 trouvent une butée 104a à l'extrémité de ce filetage, ce qui empêche le fourreau 9 de poursuivre sa translation, vers l'extérieur, au-delà d'une certaine extension, délimitant ainsi, vers le bas, une plage de réglage pour la position du réflecteur 3.

Le butoir 11 est, par ailleurs, découpé sur sa circonférence par deux entailles 110, qui sont alignées, en première approximation, selon la direction longitudinale et qui sont opposées l'une à l'autre circonférentiellement. Elles ont pour objet de réduire le diamètre du butoir sur une partie de sa circonférence, tout en lui conservant un diamètre supérieur à celui du fond du filetage. La réduction de diamètre sur la première partie a pour objet de laisser passer les filets 92 du fourreau de réglage 9 lors de sa mise en place sur la tige filetée 10, comme cela sera expliqué en détail plus loin.

Le fond de ces deux entailles prend sur sa partie supérieure, c'est-à-dire celle par laquelle est introduit le fourreau de réglage 9, une forme conique convergente en direction de l'axe de la tige filetée 10, dans le but précisément de faciliter cette introduction. Le fond de l'entaille se poursuit ensuite par une forme cylindrique dont le diamètre est légèrement supérieur à celui du fond du filetage de la barre 102.

Quant aux parois latérales des entailles 110, elles sont planes et alignées, non pas parfaitement axialement, mais en présentant une légère inclinaison par rapport à un plan axial, de sorte que l'ouverture angulaire L1 en partie basse du butoir, c'est-à-dire au niveau de la seconde face radiale 103b, est, au niveau de l'entaille, plus faible que celle L3 en partie haute, c'est-à-dire au niveau de la première face radiale 103a. Cette inclinaison génère une forme en entonnoir, qui complète la forme conique précédente, et contre laquelle les filets 92 peuvent se positionner et glisser lors de l'implantation du fourreau de réglage 9 sur la tige filetée 10.

Le fourreau 9, quant à lui, a la forme d'un cylindre creux 94, dans lequel peut se glisser la tige filetée 10. Il porte à son extrémité distale, c'est-à-dire celle opposée à la tige filetée, la sphère 90, via une surface sensiblement biconique qui raccorde le diamètre du cylindre extérieur 94 à celui de la sphère. A l'extrémité distale du cylindre extérieur se trouvent classiquement, par exemple trois, butées radiales 93, qui s'étendent radialement vers l'extérieur avec une face plane orientée du côté opposé à la sphère. Elles forment une butée pour la rétractation du fourreau 9, en venant en appui contre l'extrémité distale du manchon de guidage 80. Elles matérialisent ainsi la limite de la plage de réglage vers le haut du réflecteur 3, lorsque celui-ci est mû par le moteur électrique 7. Enfin le cylindre extérieur porte des nervures longitudinales 91 sur toute sa longueur pour servir de guide de coulissement dans son déplacement au sein du manchon de guidage 80, sous l'action de rotation du manchon de guidage lui-même en mode de préréglage manuel, comme cela a été expliqué plus haut.

La partie terminale du cylindre creux 94 porte, à son extrémité proximale (c'est-à-dire située du côté de la tige filetée 10) des dents en forme de segments hélicoïdaux, par exemple au nombre de deux, qui s'étendent vers l'intérieur et qui forment les filets 92 qui coopèrent avec le filetage de la barre 102 de la tige filetée 10. Ces deux filets ont une extension circulaire L2 et s'étendent le long d'une hélice dont le pas et l'envergure correspondent sensiblement au pas et à la profondeur dudit filetage.

En se référant maintenant à la figure 5, on voit, respectivement en vue de dessus et en vue de dessous, la tige filetée 10 et le fourreau 9. On voit que l'ouverture angulaire L2 de chacun des filets 92 de la partie terminale du fourreau 9 est inférieure à celle L3 de la partie haute du butoir 11, mais qu'elle est également légèrement supérieure à celle L1 de la partie basse de ce même butoir. De la sorte, les filets 92 pénètrent sans problème dans la partie haute du butoir 11 et sont guidés vers la partie basse de ce butoir par sa partie conique et par les parois latérales de l'entaille 110 correspondante. Une pression axiale du fourreau 9 contre le butoir 11 suffit, grâce à l'élasticité des filets 92, pour leur faire traverser la partie basse du butoir et se retrouver dans le filetage de la barre 102. La rotation relative du fourreau 9 par rapport à la tige filetée 10 et est alors possible par le déplacement des filets 92 au sein de la barre 102. Celle-ci génère alors, par vissage ou dévissage sur la tige filetée 10 la translation recherchée du fourreau 9 et de sa sphère 90.

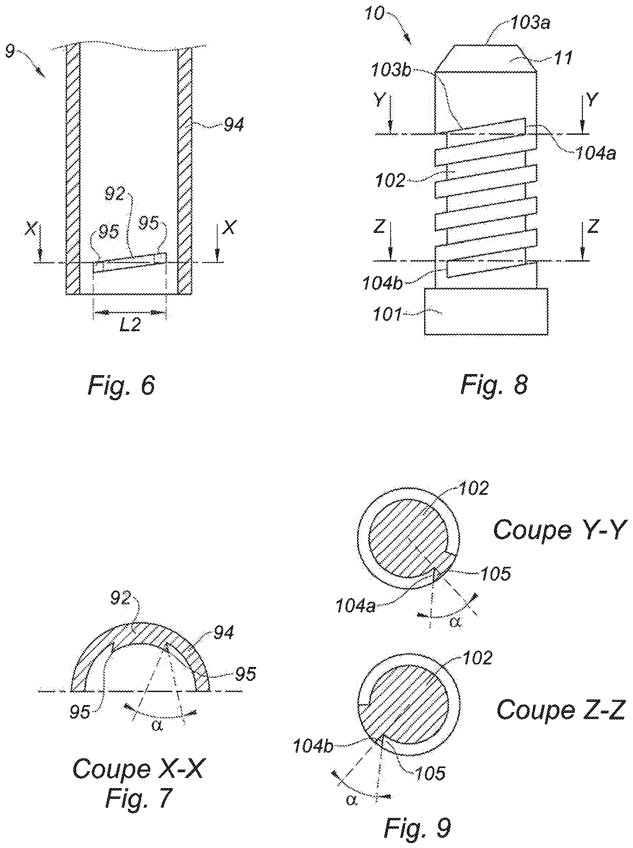

Une fois que le fourreau 9 est mis en place sur la tige filetée 10, il importe qu'il y reste et que l'application inopinée d'un couple pour la rotation de la tige filetée qui serait excessif, ne puisse pas provoquer le désaccouplement des filets 92 du filetage de la barre 102, que ce soit à l'extrémité proximale ou à l'extrémité distale de celui-ci. Pour cela tout d'abord la longueur L2 des filets 92 est, comme on l'a dit précédemment, supérieure à celle L1 de l'entaille 100 dans sa partie basse. Les extrémités longitudinales des filets 92, en dépassant de part et d'autre de l'ouverture angulaire de l'entaille 110, restent donc bloquées en dessous de la seconde face radiale 103b du butoir 11. Ensuite un dispositif de coin mâle et de coin femelle est positionné aux extrémités, d'une part, des filets 92 et, d'autre part, du filetage de la barre 102, comme cela est illustré sur les figures 6 à 9.

Les figures 6 et 7 montrent ainsi un fourreau 9 coupé (figure 6) selon un plan axial qui laisse apparaître un filet 92 qui s'étend sensiblement radialement à partir de la paroi interne du fourreau. Le filet a, vu de face, une forme parallélépipédique s'enroulant selon une hélice, à l'exception de ses deux parties terminales dont l'épaisseur s'amenuise progressivement en se détachant de la paroi interne du fourreau. L'envergure circulaire du filet croît progressivement en s'éloignant de la paroi interne de façon à former un coin mâle saillant 95 à chacune de ses extrémités (figure 7). Ce coin mâle a vocation à s'insérer dans un coin femelle qui est positionné en extrémité du filetage de la barre 102 comme cela sera décrit plus en détail en relation avec les figures 8 et 9.

La figure 7 montre une coupe transversale X-X du fourreau 9 selon un plan radial, au niveau d'un filet 92. Ce filet s'étend à partir de la paroi interne du fourreau 9 sur un secteur angulaire d'amplitude L2, et il présente à ses deux extrémités des formes en coin 95, l'amplitude du filet contre la paroi interne étant inférieure à son amplitude au centre du fourreau. Ce désépaississement du filet à ses extrémités permet, d'une part, d'avoir la flexibilité nécessaire pour le laisser passer dans l'entaille 110 de la tige filetée malgré son amplitude supérieure et, d'autre part, de former un coin mâle, saillant, 95 qui pourra s'insérer dans un coin femelle positionné en extrémité du filetage de la barre 102.

La figure 8 montre le filetage de la tige filetée 10, qui s'étend de façon hélicoïdale le long de la barre 102. Ce filetage se termine par deux faces planes formant butées circulaires, une première butée 104a étant située à l'extrémité distale de la barre, juste sous la seconde face radiale 103b du butoir 11 et une seconde butée 104b étant située à l'extrémité proximale, juste au-dessus du socle 101. Ces deux butées ne sont pas des butées orientées selon un plan axial mais elles sont néanmoins sensiblement parallèles à la direction axiale, leur plan faisant un angle avec un plan axial. De la sorte elles présentent une forme en coin comme cela est détaillé en relation avec la figure 9.

La figure 9 montre deux coupes de la tige filetée 10, respectivement Y-Y et Z-Z au niveau des extrémités distale et proximale du filetage de la barre 102. La coupe Y-Y correspond à la position de butée distale 104a sur le filetage alors que la coupe Z-Z correspond à la position de la butée proximale 104b. Sur l'une comme sur l'autre des deux coupes on voit que la zone de butée qui ferme le filetage a un diamètre égal à celui du butoir 11. Mais, comme indiqué précédemment, la face de cette butée qui ferme le filetage n'est pas orientée radialement : elle présente une forme en coin femelle rentrant 105, l'amplitude angulaire de la zone de butée allant en se réduisant en passant du diamètre du butoir à l'extérieur, à une amplitude plus restreinte en rejoignant le fond du filetage.

Pour des raisons de tenue des filets 92 dans le filetage de la barre 102 lorsque les filets sont en appui contre une des extrémités 104a ou 104b, l'angle a que font les faces de butée des coins, tant mâle 95 que femelle 105, avec la direction du plan axial correspondant est choisi préférentiellement compris entre 5 et 30°.

On va maintenant décrire le fonctionnement d'un correcteur d'éclairage 6 selon l'invention et notamment la mise en place de sa tige filetée 10 dans son fourreau 9 et les mouvements relatifs de ces deux pièces.

La tige filetée 10 est supposée déjà mise en place sur le correcteur d'éclairage 6 et reliée au moteur électrique 7 d'actionnement du correcteur en fonctionnement normal. L'opérateur fait entrer le fourreau 9 dans le manchon de guidage 80 et le solidarise en rotation avec lui par la coopération des nervures 91 du fourreau avec les rainures internes du manchon. Il positionne alors cet ensemble autour de la tige filetée 10 en faisant en sorte que les filets 92 du fourreau se trouvent en face des entailles 110 pratiquées dans le butoir 11 de la tige filetée 10. Par un appui axial adapté, l'opérateur fait passer, en force, les filets 92 par dessus le butoir 11 et notamment le fond de l'entaille 110, pour se retrouver dans la partie distale du filetage de la barre 102, à proximité de la butée distale 104a. A partir de cet instant, toute action en rotation du manchon de guidage 80, par exemple par une rotation déclenchée par la clé de réglage 20, déclenchera une rotation du fourreau 9 par rapport à la tige filetée 10 et une variation, par vissage ou dévissage, du positionnement relatif de ces deux pièces. La tige filetée étant fixe en rotation, la rotation de la clé 20 et corrélativement du manchon 80 produira un déplacement longitudinal du fourreau 9 et de sa sphère terminale 90. La rotation de la clé 20 permet ainsi de positionner le réflecteur 3 dans la position de référence recherchée.

Il convient de noter, comme cela est visible sur la figure 8, que la butée distale 104a est décalée angulairement sur la tige filetée 10 par rapport à l'entaille 110 de façon que lorsque les filets 92 sont en appui contre la butée distale 104a, ils ne soient pas positionnés en vis à vis de l'entaille et ne puissent pas sortir axialement du filetage de la barre 102, à l'image de ce qui s'est fait, dans un sens opposé, lors de l'implantation du fourreau 9 sur la tige filetée 10.

L'invention prévoit également de prévenir un éventuel désaccouplement du fourreau et de la tige filetée dans le cas où un opérateur viendrait à exercer une force trop importante sur la clé de réglage alors que les filets 92 sont arrivés sur une des butées 104a ou 104b de fin de filetage. Si les faces de ces butées, de même que les faces latérales des filets 92, étaient orientées selon un plan axial, d'une part la coopération frontale des deux parois de la butée et du filet pourrait générer des effets de matage sur les surfaces quand celles-ci viennent brutalement en contact l'une contre l'autre, et, d'autre part, il y aurait un risque que les filets 92 se déforment et passent au-delà de la butée frontale 104a ou 104b de fin de filetage. Dans le cas d'un dévissage, le fourreau se désaccouplerait de la tige filetée, sans qu'il soit possible de le raccoupler par un vissage en sens inverse de la clé de réglage 20. L'incident nécessiterait alors un désassemblage complet du correcteur d'éclairage, si ce n'est, même, une mise au rebut du correcteur dans sa totalité.

L'invention pallie ce défaut par la mise en place de deux coins, mâle 95 sur les filets 92 du fourreau 9 et femelle 105 sur les butées 104a et 104b de fin de filetage. Ces coins coopèrent selon un plan qui est décalé circulairement, entre 5 et 30°, par rapport à un plan axial. En fin de filetage, le coin mâle 95 s'insère ainsi sous le coin femelle 105, et la fonction de toit que procure le coin femelle empêche le coin mâle de sauter par-dessus et de s'échapper du filetage. Cette fonction est assurée tant dans un sens de vissage du fourreau, par la butée proximale 104b que de dévissage de celui-ci, par la butée distale 104a.

## Revendications

1. Correcteur de hauteur d'éclairage pour un projecteur automobile à réflecteur comprenant un élément de réglage (9) apte à modifier l'inclinaison dudit réflecteur (3), une tige filetée (10) et un moyen d'actionnement en translation (7) de ladite tige filetée (10), ledit élément de réglage (9) étant mobile en translation par vissage ou dévissage sur ladite tige filetée (10), ledit élément de réglage (9) comportant à cette fin au moins un filet (92) conformé pour coopérer avec le filetage de ladite tige filetée (10), le filetage de ladite tige filetée (10) comportant, à son extrémité distale, au moins une butée (104a) conformée pour limiter la translation de l'élément de réglage (9) en éloignement par rapport à la tige filetée (10), par coopération avec ledit filet (92), **caractérisé en ce que** la tige filetée (10) a sensiblement la forme d'une barre cylindrique (102), dans laquelle est formé ledit filetage, qui se prolonge par un butoir (11) sensiblement cylindrique dont le diamètre est supérieur à celui du fond dudit filetage, ledit butoir formant ladite butée (104a) à l'extrémité distale dudit filetage, ladite butée étant formée par une première face plane (104a) faisant un angle (a) avec un plan axial de la tige filetée (10) de façon à former un coin femelle rentrant (105), l'élément de réglage ayant la forme d'un cylindre creux dont la partie proximale porte au moins un secteur d'hélice formant ledit filet (92), ledit filet (92) s'étendant à partir de l'intérieur du cylindre et comportant à au moins une de ses extrémités une seconde face plane faisant un angle (∝) avec un plan axial du cylindre, de façon à former un coin mâle saillant (95), le coin mâle (95) s'insérant ainsi sous le coin femelle (105) en fin de filetage, le coin femelle (105) procurant une fonction de toit empêchant le coin mâle (95) de sauter par-dessus et de s'échapper du filetage.

2. Correcteur selon la revendication 1, comportant en outre un manchon de réglage manuel (8) entourant l'élément de réglage (9), ledit élément de réglage (9) comportant au moins une nervure (91) conformée pour l'immobiliser en rotation par rapport au manchon (8) par coopération avec des moyens de guidage en translation portés par ledit manchon.

3. Correcteur selon la revendication 1, dans lequel ladite première face plane (104a) fait un angle compris entre 5 et 30° avec le plan axial correspondant de la tige filetée (10).

4. Correcteur selon la revendication 1, dans lequel le butoir (11) comporte au moins une entaille (110) s'étendant circulairement, sur le secteur angulaire de laquelle le diamètre du butoir est réduit par rapport au diamètre du butoir hors entaille.

5. Correcteur selon la revendication 4, dans lequel l'entaille (110) est limitée latéralement par deux faces planes alignées avec une inclinaison par rapport à un plan axial de sorte que l'ouverture angulaire (L1) dans une partie basse du butoir (11) située à une extrémité au niveau du filetage est plus faible que l'ouverture angulaire (L3) dans une partie haute située à une extrémité opposée du butoir (11).

6. Correcteur selon la revendication 1, dans lequel ladite seconde face fait un angle compris entre 5 et 30° avec le plan axial correspondant du cylindre.

7. Correcteur selon la revendication 6, dans lequel ledit filet comporte un coin mâle saillant (95) à chacune de ses extrémités.

8. Correcteur selon la revendication 5 et l'une des revendications 6 ou 7 en combinaison, dans lequel l'ouverture angulaire (L2) du filet (92) est comprise entre l'ouverture angulaire (L1) en partie basse du butoir (11) et l'ouverture angulaire (L3) en partie haute dudit butoir.

9. Correcteur selon l'une des revendications 1 à 8, dans lequel ladite tige filetée comprend, à son extrémité proximale, au moins une seconde butée (104b) limitant la translation de l'élément de réglage en rapprochement par rapport audit correcteur.

10. Correcteur selon la revendication 9, dans lequel le filetage de la tige filetée (10) se termine par une troisième face plane (104b) formant la dite seconde butée et faisant un angle (∝) avec un plan axial de la tige filetée (10) de façon à former un coin femelle rentrant (105).

11. Correcteur selon la revendication 10, dans lequel ladite troisième face plane (104b) fait un angle compris entre 5 et 30° avec le plan axial correspondant de la tige filetée (10).

## Patentansprüche

1. Leuchthöhenregler für einen Autoscheinwerfer mit Reflektor, der ein Verstellelement (9), das in der Lage ist, die Neigung des Reflektors (3) zu verändern, eine Gewindestange (10) und ein Mittel zur translatorischen Bewegung (7) der Gewindestange (10) umfasst, wobei das Verstellelement (9) durch Schrauben bzw. Losschrauben auf der Gewindestange (10) translatorisch beweglich ist, wobei das Verstellelement (9) zu diesem Zweck ein Gewinde (92) umfasst, dass so ausgebildet ist, dass es mit dem Gewinde der Gewindestange (10) zusammenwirkt, wobei das Gewinde der Gewindestange (10) an seinem distalen Ende mindestens einen Anschlag (104a) umfasst, der so ausgebildet ist, dass die Translation des Verstellelements (9) weg von der Gewindestange (10) durch Zusammenwirken mit dem Gewinde (92) begrenzt wird, **dadurch gekennzeichnet, dass** die Gewindestange (10) im Wesentlichen die Form eines zylindrischen Stabs (102) aufweist, in dem das Gewinde ausgebildet ist, das in einen im Wesentlichen zylindrischen Stopper (11) übergeht, dessen Durchmesser größer ist als das des Gewindegrunds, wobei der Stopper den Anschlag (104a) am distalen Ende des Gewindes bildet,
wobei der Anschlug durch eine erste ebene Fläche (104a) gebildet wird, die einen Winkel ( 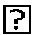 ) mit einer axialen Ebene der Gewindestange (10) bildet, so dass ein zurückgesetzter Innenkeil (105) gebildet wird,
wobei das Verstellelement die Form eines Hohlzylinders aufweist, dessen proximaler Teil mindestens einen Helixsektor enthält, der das Gewinde (92) bildet, wobei sich das Gewinde (92) vom Inneren des Zylinders aus erstreckt und an mindestens einem seiner Enden eine zweite ebene Fläche aufweist, die einen Winkel (∝) mit einer axialen Eben des Zylinders bildet, so dass eine hervorstehender Außenkeil (95) gebildet wird, wobei sich der Außenkeil (95) am Ende des Gewindes unter den Innenkeil (105) schiebt,
wobei der Innenkeil (105) eine Dachfunktion bereitstellt, die verhindert, dass der Außenkeil (95) herausspringt und aus dem Gewinde ausbricht.

2. Regler nach Anspruch 1, der ferner eine manuelle Verstellhülse (8) umfasst, die das Verstellelement (9) umschließt, wobei das Verstellelement (9) mindestens eine Verrippung (91) umfasst, die so ausgebildet ist, dass sie es in Bezug auf die Hülse (8) durch Zusammenwirken mit von der Hülse getragenen Mitteln zur translatorischen Führung gegen Verdrehung blockiert.

3. Regler nach Anspruch 1, wobei die erste ebene Fläche (104a) einen Winkel zwischen 5 und 30° mit der entsprechenden axialen Ebene der Gewindestange (10) bildet.

4. Regler nach Anspruch 1, wobei der Stopper (11) mindestens eine sich kreisförmig erstreckende Kerbe (110) umfasst, über deren Winkelsektor der Durchmesser des Stoppers in Bezug auf den Durchmesser des Stoppers außerhalb der Kerbe verringert ist.

5. Regler nach Anspruch 4, wobei die Kerbe (110) seitlich durch zwei ebene Flächen begrenzt ist, die mit einer Neigung in Bezug auf eine axiale Ebene ausgerichtet sind, so dass die Winkelöffnung (L1) in einem unteren Teil des Stoppers (11), der sich an einem Ende auf Höhe des Gewindes befindet, kleiner ist als die Winkelöffnung (L3) in einem oberen Teil, der sich an einem gegenüberliegenden Ende des Stoppers (11) befindet.

6. Regler nach Anspruch 1, wobei die zweite Fläche einen Winkel zwischen 5 und 30° mit der entsprechenden axialen Ebene des Zylinders bildet.

7. Regler nach Anspruch 6, wobei das Gewinde an jedem seiner Enden eine hervorstehenden Außenkeil (95) umfasst.

8. Regler nach Anspruch 5 und einem der Ansprüche 6 oder 7 kombiniert, wobei die Winkelöffnung (L2) des Gewindes (92) zwischen der Winkelöffnung (L1) im unteren Teil des Stoppers (11) und der Winkelöffnung (L3) im oberen Teil des Stoppers liegt.

9. Regler nach einem der Ansprüche 1 bis 8, wobei die Gewindestange an ihrem proximalen Ende mindestens einen zweiten Anschlag (104b) aufweist, der die Translation des Verstellelements bei Annäherung an den Regler begrenzt.

10. Regler nach Anspruch 9, wobei das Gewinde der Gewindestange (10) mit einer dritten ebenen Fläche (104b) endet, die den genannten zweiten Anschlag bildet und einen Winkel (∝) mit einer axialen Ebene der Gewindestange (10) bildet, so dass ein zurückgesetzter Innenkeil (105) gebildet wird.

11. Regler nach Anspruch 10, wobei die dritte ebene Fläche (104b) einen Winkel zwischen 5 und 30° mit der entsprechenden axialen Ebene der Gewindestange (10) bildet.

## Claims

1. Lighting height corrector for a motor vehicle headlamp with a reflector, comprising an adjustment element (9) capable of modifying the inclination of said reflector (3), a threaded rod (10), and a means for actuating the translation (7) of said threaded rod (10), said adjustment element (9) being movable in translation by screwing or unscrewing on said threaded rod (10), said adjustment element (9) including for this purpose at least one thread (92) shaped such as to co-operate with the threading of said threaded rod (10), the threading of said threaded rod (10) including, at the distal end thereof, at least one stop (104a) shaped to limit the translation of the adjustment element (9) away from the threaded rod (10), by co-operation with said thread (92), **characterised in that** the threaded rod (10) is substantially in the form of a cylindrical bar (102) in which said threading is formed, said threading being extended by a substantially cylindrical abutment (11) of which the diameter is greater than that of the base of said threading, said abutment forming said stop (104a) at the distal end of said threading,
said stop being formed by a first flat face (104a) making an angle (a) with an axial plane of the threaded rod (10) so as to form a re-entrant female wedge (105),
the adjustment element having the shape of a hollow cylinder the proximal part of which supports at least one helical sector forming said thread (92), said thread (92) extending from the interior of the cylinder and having on at least one of its ends a second flat face making an angle (a) with an axial plane of the cylinder so as to form a projecting male wedge (95), thus the male wedge (95) being inserted under the female wedge (105) at the end of the threading, the female wedge (105) providing a cover function that prevents the male wedge (95) from leapfrogging over it and escaping from the threading.

2. Corrector according to claim 1, also including a manual adjustment sleeve (8) surrounding the adjustment element (9), said adjustment element (9) comprising at least one rib (91) shaped so as to immobilise it in rotation relative to the sleeve (8) by co-operation with means for guiding in translation which are supported by said sleeve.

3. Corrector according to claim 1, wherein said first flat face (104a) makes an angle between 5 and 30° with the corresponding axial plane of the threaded rod (10).

4. Corrector according to claim 1, wherein the abutment (11) includes at least one notch (110) extending in a circular manner, on the angular sector of which the diameter of the abutment is reduced relative to the diameter of the abutment outside the notch.

5. Corrector according to claim 4, wherein the notch (110) is limited laterally by two aligned flat faces having an inclination with respect to an axial plane in such a way that the angular opening (L1) in a lower part of the abutment (11) situated at an end at the level of the threading is smaller than that the angular opening (L3) in an upper part situated at an end opposite the abutment (11).

6. Corrector according to claim 1, wherein said second face makes an angle between 5 and 30° with the corresponding axial plane of the cylinder.

7. Corrector according to claim 6, wherein said thread has a projecting male wedge (95) at each of its ends.

8. Corrector according to claim 5 and one of claims 6 or 7 in combination, wherein the angular opening (L2) of the thread (92) is comprised between the angular opening (L1) in the lower part of the abutment (11) and the angular opening (L3) in the upper part of said abutment.

9. Corrector according to one of claims 1 to 8, wherein said threaded rod comprises, at its proximal end, at least one second stop (104b) limiting the translation of the adjustment element towards said corrector.

10. Corrector according to claim 9, wherein the threading of the threaded rod (10) terminates by a third flat face (104b) forming said second stop (104b) and making an angle (a) with an axial plan of the threaded rod (10) so as to form a re-entrant female wedge (105).

11. Corrector according to claim 10, wherein said third face (104b) makes an angle between 5 and 30° with the corresponding axial plane of the threaded rod (10).
